# EUROPEAN PATENT SPECIFICATION

(11) **EP 2 188 689 B1**
(45) Date of publication and mention of the grant of the patent: **26.06.2013**
(21) Application number: 08799145.1
(22) Date of filing: 04.09.2008
(51) Int. Cl.: G05D 11/00

(54) **ACCURATE DILUTION CONTROL APPARATUS AND METHODS**
VORRICHTUNGEN UND VERFAHREN ZUR GENAUEN VERDÜNNUNGSSTEUERUNG
APPAREIL DE COMMANDE DE DILUTION PRÉCISE ET PROCÉDÉS

(30) Priority: 07.09.2007 US 851954
(43) Date of publication of application: 26.05.2010
(73) Proprietor: Delaware Capital Formation, Inc., Wilmington, Delaware 19809 (US)
(72) Inventor: SAND, William, F., Cincinnati, OH 45238 (US)
(74) Representative: Findlay, Alice Rosemary
(86) International application number: PCT/US2008/075189
(87) International publication number: WO 2009/032882

(56) References cited:
- US-A- 4 006 752
- US-A- 4 324 294
- US-A- 4 357 953
- US-A1- 2004 026 451
- US-A1- 2006 203 609
- US-B1- 6 170 703

## Description

### Field of Invention

This invention relates to apparatus and methods for dispensing and mixing liquids, and more particularly to such apparatus and methods that dispense and mix chemicals, and even more particularly to dispensing and mixing cleaning chemicals.

### Background of the Invention

It is common practice to purchase concentrated cleaning chemicals and to mix them with other liquids such as water to achieve the desired usage concentration for cleaning. A variety of proportioning dispensers have been developed to achieve this. The dispensers often employ venturi-type devices sometimes called eductors to draw the concentrated liquid chemical and mix it with the water stream. Examples of such eductors include those shown in Sand U.S. Pat. Nos. 5,522,419, 5,253,677, 5,159,958, and 5,862,829, all of which are assigned to the Assignee of the present invention and are expressly incorporated herein. Water traveling through the central, constricted portion of the venturi creates a vacuum therein which is used to draw concentrate liquids such as cleaning or other chemicals into the water stream and a mixture of water and chemical is discharged.

The structure of such eductors is generally fixed, and thus, for a given water stream flow rate, the amount of concentrated liquid chemical drawn is a function of the fluid resistance, typically created by a small orifice in the flow path of the concentrated liquid chemical. Such orifices may be fixed or adjustable to vary the proportionate flow.

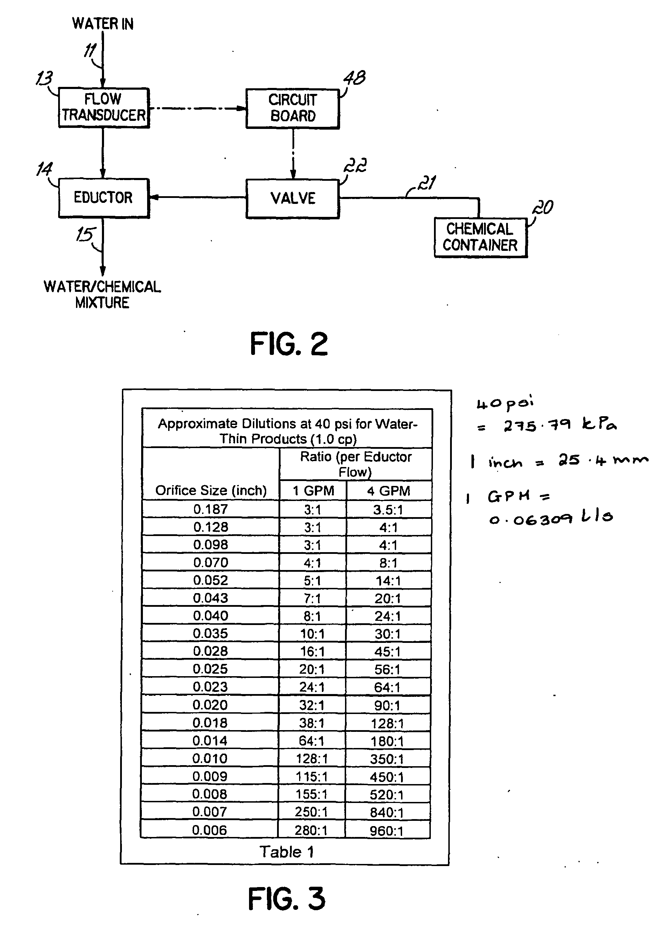

Achieving the proper proportion of chemical with selection of a particular metering orifice is complicated by factors which vary per application, such as the desired usage concentration, the viscosity of the concentrated liquid chemical, and the temperature of the concentrated chemical, to name a few. Using metering orifices to control dilution in the typical dilution ranges or ratios desired means that very small metering orifice sizes are required. Table 1 of FIG. 3 illustrates the ratio results of various typical fixed orifice sizes with constant concentrate flow at both 1 gallon per minute (GPM) (0.0631 l/s) and 4 GPM (0.2524 l/s) diluent flow rates.

Metering orifices have sometimes been used to achieve dilution ratios about 1 down to about 1000:1. More dilute mixtures are constrained by the volume rate of water available and by the smallest practical size of the metering orifices. Very small orifices are susceptible to clogging such as from contaminant particles or artifacts in the concentrated chemicals. In addition, the viscosity of the chemical imposes minimum size limitation of the orifice size.

Devices to prevent clogging from contaminants and other particles have been developed. An example of one such device is that disclosed in Sand U.S. Patent 6,238,081.

In addition, many modem day chemicals are produced to be mixed with water in a very specific range of dilution ratios. One example of such a chemical would be a sanitizer which if diluted too lean would not produce the desired sanitizing result thereby possibly causing health issues, and if diluted too rich, could cause chemical contamination issues a well as the cost of using excessive chemical. The dilution ratios of some such chemicals are controlled by Local Health Departments. They may dictate certain ratios without regard to the availability of equipment having the capacity to produce diluted mixtures at those ratios. Therefore the ability to meter the chemical with the water in a more exact ratio is highly desirable. An example of this would be a dilution ratio of 140:1. Note that the practical orifice sizes shown in Table 1 in FIG. 3 does not allow one to achieve this dilution ratio with either a 1 GPM (0.0631 l/s) eductor (diluent) flow rate or a 4 GPM (0.2524 l/s) eductor (diluent) flow rate.

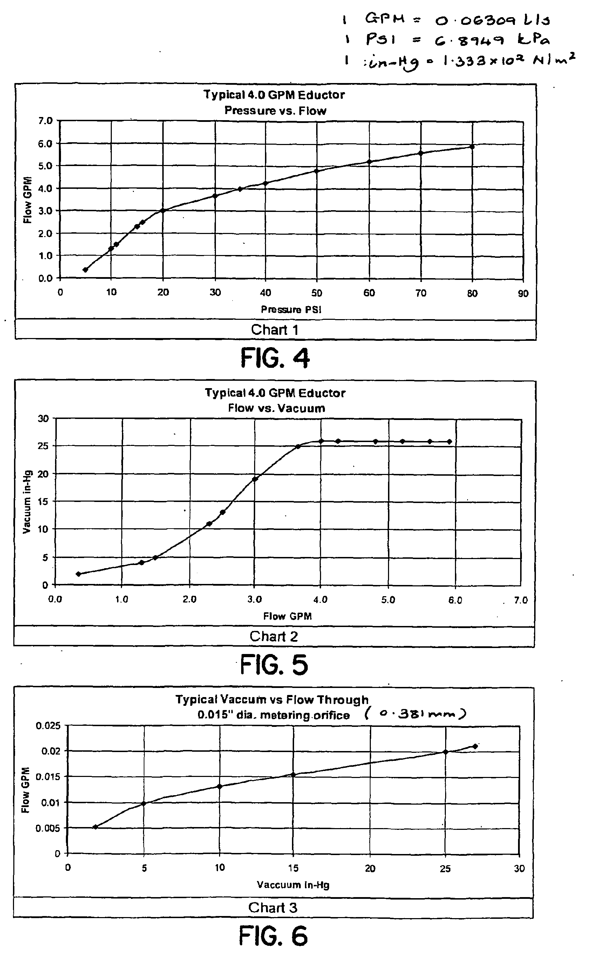

Chemical flow rate through the orifices and orifice clogging are not the only negative issues encountered with this type of system. Typically as the water pressure presented to an eductor increases, the volume of water flowing through the eductor also increases. Chart 1 of FIG. 4 shows a typical performance curve for a 4.0 GPM (0.2524 l/s) eductor. A similar type curve could be generated for eductors with different flow rate ratings.

The liquid pressure introduced to an eductor based system is dependent upon the installation. Many variables can affect the water pressure to an eductor. Some of these variables can include but are not limited to the size of the plumbing supply piping (which causes pressure drops), and the placement of the eductor based system in the building. For example, systems installed on the top floor of a multi-leveled building may have less pressure than a similar system installed on a lower level of the same building. In addition water usage can affect the pressure to the system. When the system is in operation and an additional device in the water line, such as a toilet, is used the additional water used by the toilet will reduce the water flow resulting in both the pressure to drop and less flow thru the system.

As noted above, an eductor creates a vacuum which draws in the chemical and mixes it with the water stream. The vacuum created is related to the fluid flowing through the eductor. Chart 2 of FIG. 5 illustrates the vacuum created by a typical 4 GPM (0.2524 l/s) eductor at various flows.

The maximum vacuum that can be produced is approximately 30 in-Hg (101.59 kPa) Eductors in general have a maximum vacuum level of about 27 in-Hg (91.43 kPa) This effectively caps concentrate flow and thus increases dilution ratios for high flows of diluent.

When pressure supplied to the eductor system varies the eductor (diluent) flow varies as shown in FIG. 4. Eductor vacuum is relative to flow. FIG. 5 shows results of vacuum varying with constant flow of chemicals having viscosity similar to that of water. Since the vacuum of the system will vary, the flow thru the metering orifice drawn by the vacuum will vary also. Referring to FIG. 3, the dilution ratios were computed with a vacuum of 25 in-Hg (84.66 kPa). Chart 3 of FIG. 6 shows the relationship of vacuum and constant concentrate flow through an orifice of a specific size.

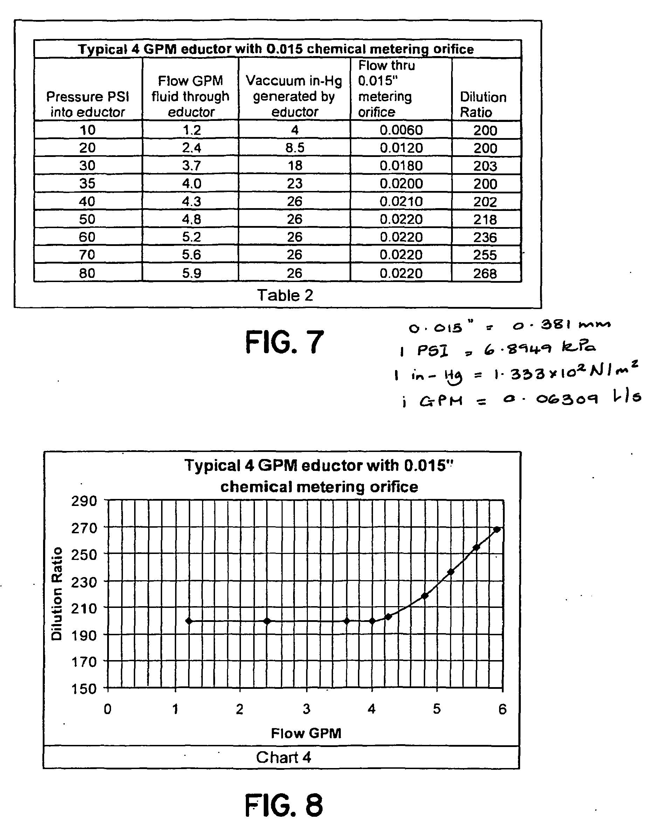

Dilution ratio is computed by dividing the fluid (diluent) flow through the eductor by the chemical flow thru metering orifice that is then mixed with the first fluid. Table 2 of FIG. 7 show the relationship of pressure to dilution ratio in a 4 GPM (0.2524 l/s) eductor combined with a metering orifice of 015" (0.381 mm) and with accompanying flow and vacuum parameters with constant concentrate flow.

This table of FIG. 7 shows that pressure, fluid flow and vacuum and chemical through the metering orifice all increase up to flow of 4 GPM (0.2524 l/s) at which time the pressure and fluid flow continue could increase but the vacuum has reached its highest level and therefore flow of concentrates through the metering orifice reaches its maximum. As a result, the same or richer ratios are not possible to attain when further increasing the diluent pressure air flow, since more and more diluent mixed with the maximum chemical flow results only in leaner (or higher) ratios of diluent to chemical.

It is much easier to see this relationship of Flow as it relates to Dilution Ratio in graphical format, thus is supplied Chart 4 of FIG. 8. The dilution ratio is almost constant up to 4 GPM (0.2524 l/s) flow. As the fluid flow continues to increase, the chemical flow remains constant due to no increase in vacuum, thus the dilution ratio increases.

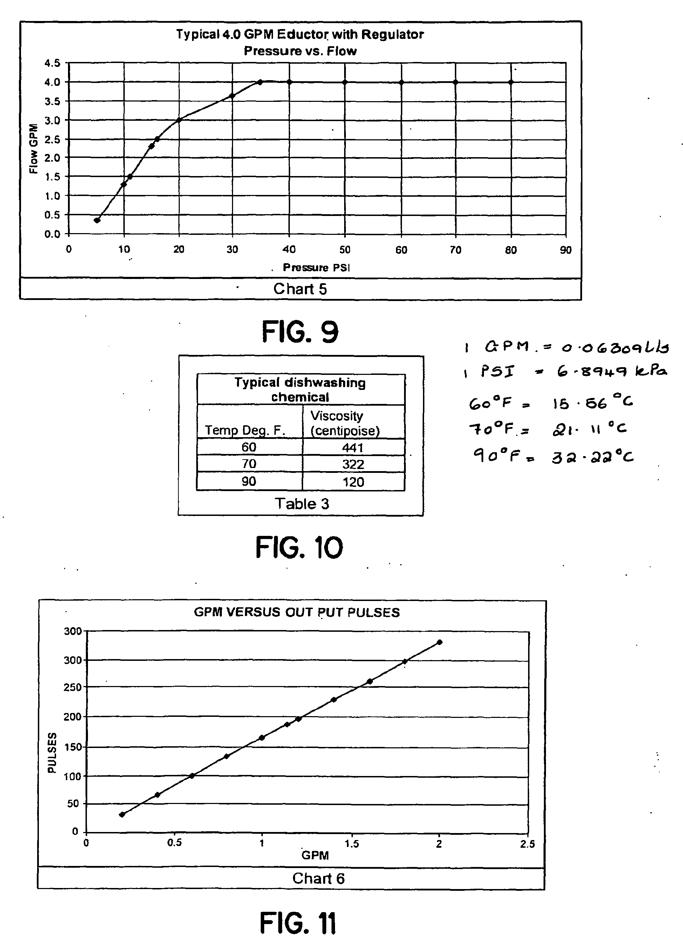

There are devices which will limit the upper pressure limit of diluent introduced into an eductor. An example of such a device would be a pressure regulator such as that produced by Watts Regulator Company of Andover, Massachusetts, under model designation "Watts Series 26A". Chart 5 of FIG. 9 illustrates a pressure regulator set at 35 PSI (241.32 Kpa) and the flow out of the regulator and into the eductor thus is maintained at a constant flow rate, in. this case 4.0 GPM (0.2524 l/s) The pressure regulator could have been set to a lower pressure and thus a lower flow rate provided through the eductor.

Pressure regulators can be costly devices. Since they are mechanical and have moving parts they must be adjusted or replaced on a periodic basis which adds to both equipment and maintenance costs.

Use of the pressure regulator with an eductor produces constant flow when the input pressure to the regulator is above the set-point of the regulator, thus maintaining a constant flow above the pressure input set-point.

As stated previously, cleaning chemicals are produced in various viscosities. Viscosities of these agents can range from 1 centipoise which is the consistency of water to 3000 centipoise which is like honey. This variation in viscosity makes the selection of the correct size of metering orifice for each chemical difficult for all of the various field applications of the system. In other words, use of a single metering orifice size will not satisfy a wide variety of field applications, even with a constant diluent pressure and flow.

To further complicate the selection of metering orifice size, the viscosity of many chemicals changes as temperature changes. The systems that use these devices may be installed in kitchens or laundry rooms which may have temperatures close to 100 degrees Fahrenheit (37.78°c) or in meat rooms and produce facilities which have temperatures as low as 40 degrees Fahrenheit (4.44°c). An example of such viscosity changes are shown in Table 3 of FIG. 10.

Consequently, if all variables as discussed above are not taken into account, chemicals are mixed either too rich in which case additional chemical usage and costs are incurred or the mix is too lean in which case the solution does not perform properly or properly treat targeted health hazards due to insufficient cleaning.

It is thus one object of the invention to provide apparatus and methods for more accurate dilution in such dispensing and mixing systems.

A further object of the invention is to provide methods and apparatus for producing wider ranges of dilution ratios in a proportioner with fixed chemical metering orifices than hereto possible and with increased accuracy.

A yet further objective of the invention is to provide am for producing accurate dilution ratios in fixed orifice proportioners despite variation in diluent flow and chemical viscosity and temperature.
US 4006752 discloses a fluid flow system including automatic feeder control for supplying chemicals to fluid flowing through a conduit and utilizing a Hall Effect detector which supplies an output to a digital counter which feeds a comparator that operates a timer and electronic switch to control the chemical feeder.

### Summary of Invention

The present invention provides a chemical dispensing apparatus of Claim 1 and a method of mixing a liquid concentrate with a liquid diluent flowing through an eductor of Claim 5.

At least in preferred embodiments the invention provides an apparatus capable of producing a wide range of accurately diluted chemical mixes by cycling flow of the chemical through an eductor during diluent flow in response to a predetermined or commanded dilute ratio and in response to a variety of sensed parameters of fluid flow and viscosity. The result of this is the provision of a wide range of dilute ratios which are available through the use of a fixed orifice but are not so limited as, and are far more diverse than, a system which constantly draws chemical through that orifice. The results produced include ratios as rich as can be achieved through the given orifice at the highest of diluent flows and highest chemical viscosities and as lean as can be achieved through that orifice at the lowest diluent flows and lowest viscosities of the chemical used.

Moreover, the dilute ratios are not limited to mixes produced where the chemical is introduced to the diluent during the entire duration of diluent flow.

Such apparatus and methods thus provides a wide range of ratios meeting the arbitrary regulations of health and other organizations and without the bother of multiple orifices, pressures regulators and the like.

In one embodiment of the invention, a user simply selects the dilution required and the viscosity of the chemical to be diluted (if the automatic temperature viscosity rate change selector to be described is not used). He then starts the water flow and the controller cycles a control valve in the chemical line to cycle chemical flow to an eductor based on the noted parameters and dilution ratio selected. The method thus contemplates the provision of a wide range of diluent-to-chemical mix ratios through cycling the chemical flow into the diluent.

These and other objectives, embodiments and advantages will become readily apparent from the following detailed description of embodiments of the invention and from the drawings in which:

### Brief Description of the Drawings

FIG. 1 is a perspective view of a concentrate dilution apparatus according to the invention;

FIG. 2 is a flow-chart illustrating operation of the invention;

FIGS. 3-10 are respective charts and tables referred to in the Background of the Invention for illustration, and more particularly:

FIG. 3 is a first table illustrating dilution ratios for set parameters;

FIG. 4 is a first chart and illustrates pressure versus flow in a 4 GPM (0.2524 l/s) eductor;

FIG. 5 is a second chart and illustrates flow versus vacuum in a 4 GPM (0.2524 l/s) eductor;

FIG. 6 is a third chart and illustrates typical vacuum versus flow through given orifice of 0.015" (0.381 mm);

FIG. 7 is a second table and shows parameters of a 4 GPM (0.2524 l/s) eductor in combination with a given orifice of 0.015" (0.381 mm);

FIG. 8 is a fourth chart and illustrates a graphical format of the information in FIG. 7;

FIG. 9 is a fifth chart and illustrates parameters of pressure versus flow in a 4 GPM (0.2524 l/s) eductor with regulator; and

FIG. 10 is a third table showing temperature and viscosity parameters

FIG. 11 is a sixth chart and illustrates GPM (× 0.06309 l/s) eductor flow versus output pulses of a transducer as used in this invention;

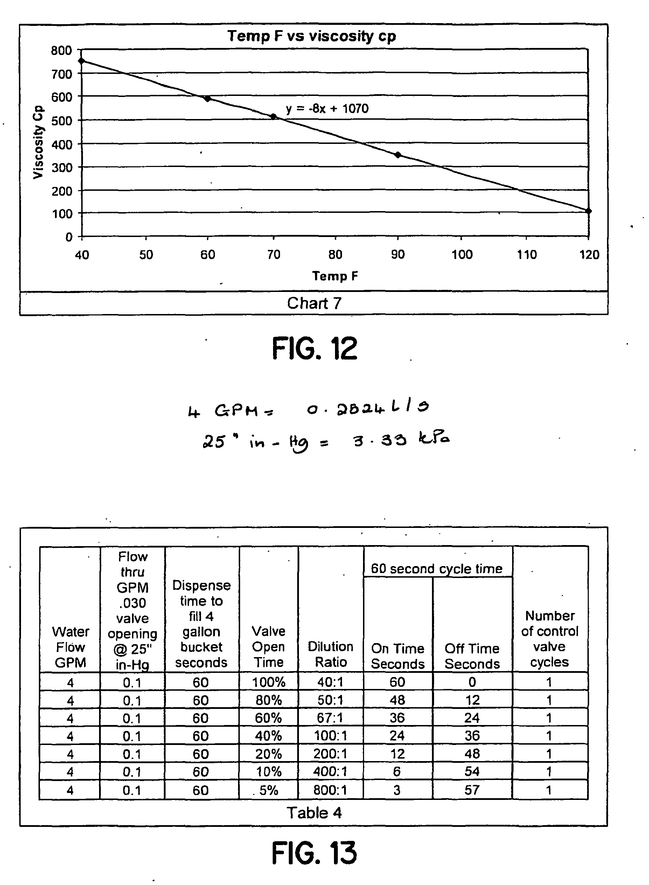

FIG. 12 is a seventh chart and illustrates in graphical format the relationship of temperature and viscosity of a sample of liquid;

FIG. 13 is a fourth table illustrating parameters of cycling a valve to produce varying dilution rates according to the invention;

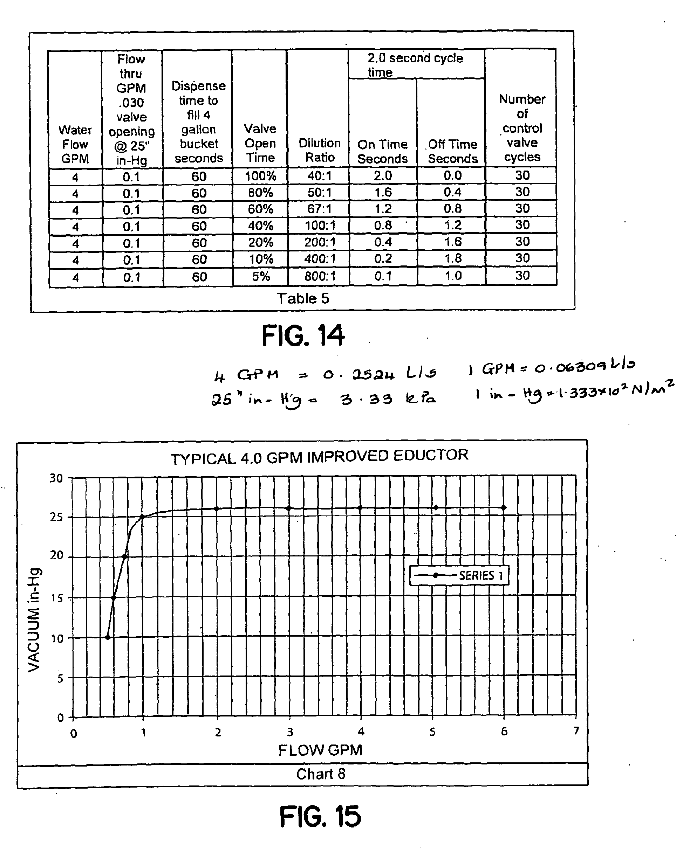

FIG. 14 is a fifth table illustrating an alternative dilution producing operation according to the invention;

FIG. 15 is an eighth chart and illustrates flow and vacuum parameters of an alternate 4 GPM (0.2524 l/s) eductor according to the invention; and

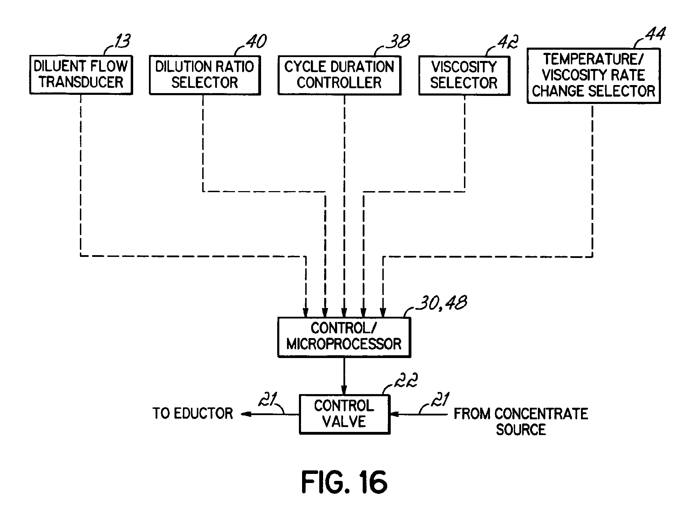

FIG. 16 is a diagram illustrating inputs to the control unit for the control valve of the invention.

### Detailed Description of the Invention

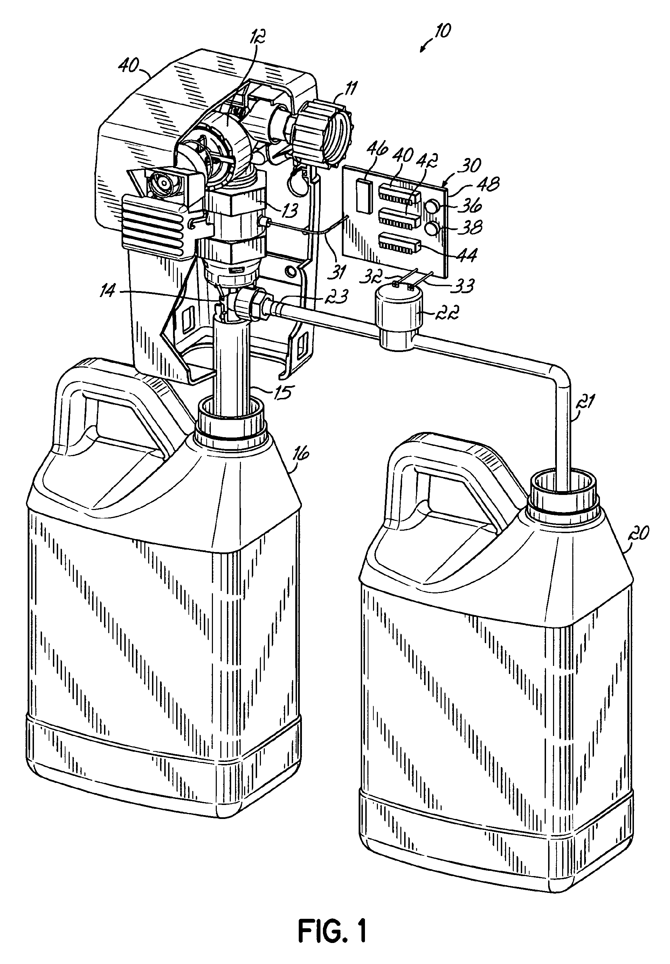

Turning now to FIG. 1, there is illustrated details of one embodiment of the invention.

In this FIG. 1, a proportioner 10 includes a diluent (such as water) inlet 11 operatively coupled, through an on/off water control valve 12 and a transducer 13, to an eductor 14, coupled to receive and to discharge a mixture of diluent and chemical through discharge tube 1 into a mixed diluted chemical container 16.

A chemical source or container 20 is coupled to or receives a chemical pick up tube or draw conduit 21. A chemical control valve 22 is operably disposed in conduit 21 between the chemical source 20 and a metering orifice 23 at the eductor (not shown in detail). Orifice 23 is operatively connected to pass chemical from conduit 21 into the eductor 14 at the venturi portion thereof.

An electronic control 30 is operatively connected through line 31 to transducer 13 for receiving a signal from the transducer representing fluid flow. Control 30 is operatively coupled through lines 32, 33 to chemical control valve 22 for cycling that valve between open and closed positions to selectively open and close chemical conduit or pickup tube 21. On/off operation of valve 22 effectively cycles chemical flow into the eductor when diluent is flowing therethrough.

A cabinet 40 covers the components comprising the valve 12, transducer 13, eductor 14 and portion of the discharge tube 15 as desired, with the on/off control valve being operationally accessible from outside the cabinet. While not shown, the cabinet 40 may be extended or compartmented to house control 30 and chemical control valve 22.

The transducer 13 is preferably a flow transducer or flow sensor. A pressure transducer could be used, however, it would require more electronic circuitry as such transducer output typically comprises an analog signal. Also, the output of a pressure transducer is generally not linearly proportioned to the flow in "GPM" (as used herein, "GMP" refers to "gallons per minute").

Another advantage of using a flow transducer is that it produces signal pulses which could be transferred to control 30 by wire or by the use of wireless technology where desired. Such electrical pulses or signals are operably transmitted to the control 30 as will be described.

One particular form of flow transducer which is useful is that transducer marketed as the GEMS flow sensor by GEMS Sensors, Inc. of Plainville, Connecticut.

Eductor 14 may comprise any useful eductor, preferably capable of consistent operation at 1 GPM (0.06309 l/s) or at 4 GPM (0.2524 l/s). Such eductor could be as described in the aforementioned patents.

The control 30 preferably includes a plurality of components including a temperature sensor 36, a cycle duration controller 38, a dilution ratio selector 40, a viscosity selector 42, a temperature/viscosity rate change selector 44 and a microprocessor or programmable logic controller 46. Subject to the following, all these components could be mounted on a circuit board 48 or on other components or through other technologies for operatively mounting and/or coupling electronic components and chips, such as surface mount technology. Such technology itself does not comprise part of this invention.

The temperature sensor 36 could be aboard 48 mounted sensor. This type of sensor is economical and is produced by many manufacturers. One such sensor is manufactured by the Minco Company, headquartered in Minneapolis, Minnesota and marketed under the model name Minco S 102404. The temperature sensor should be capable of sensing temperatures from 40 degrees F (4.44 °C) to 120 degrees F (48.49°C). Typical applications would be a meat packing room in a grocery store that can operate as low as 40 degrees F (4.44 °C) or a restaurant kitchen which may reach temperatures of 120 degrees F (48.89°C). This sensor may be mounted on the circuit board or may be removed from the circuit board to closer orientation with the chemical source and transmit the temperature signal via wire or with wireless technology. In this embodiment the circuit board 48 mount was selected for the low cost. Another embodiment would be the placement of the temperature sensor in the chemical container or in direct contact with the chemical in the fluid path. Such a location of the temperature sensor would add cost to the system. One such remote sensor is also made by the Minco Company under Model S56NA.

The Temperature/Viscosity Rate Change Selector 44 is a variable device preferably mounted to the circuit board 48 and is used to input the change of viscosity of the chemical as it changes with temperature. As stated earlier the viscosity of some chemicals change with temperature. The viscosity change cause the chemical flow rate to change. Each chemical has a unique temperature to viscosity rate change. A typical rate change is shown in Chart 7 of FIG. 12.

The typical rate of viscosity change responsive to temperature is shown by the equation y=-8x+1070. Where y is the viscosity, x is the temperature and "1070" is a constant. In this case the value "-8" and "1070" are input to the microprocessor 46 by way of Rate change selector. This selector 44 may be mounted on the circuit board 48 as noted. In this embodiment the circuit board 48 mount was selected for the low cost. Such a temperature/viscosity rate change selector 44 can be of any suitable construction. One such selector is marketed by the Grayhill Company of LaGrange, Illinois under Model No. 76SB10T.

The viscosity selector 42 is a variable device preferably mounted to the circuit board 48 and is used to input the viscosity of the chemical to be mixed. In this embodiment the selection is made via dip switches. The viscosity value to be selected could be from 1 to 3000. The viscosity selector 42 could also be a rheostat or other variable device. The dip switch was selected due to the low cost and ease of use.

The temperature sensor 36, Temperature/Viscosity Rate Change Selector 44 and viscosity selector 42 could all be replaced with a single unit. Under this embodiment, the single unit could be remotely mounted and connected to the circuit board with wires or could transmit the data with wireless technology. One such single unit is made by Vectron Company of Hudson, New Hampshire under the Model Name ViSmart.

The dilution ratio selector 40 is a variable device mounted to the circuit board 48 which is used to input the desired dilution ratio. That is the ratio of water to chemical. Any suitable and adjustable electronic input apparatus could be used. One such unit found useful is the selector made by Grayhill Company of LaGrange, Illinois as Model No. 76B10T.

Finally, the cycle duration controller 38 is simply a selector for manually setting the duration of any dispensing cycle as desired, such as a timer. One such selector found useful is the selector made by Grayhill Company of LaGrange, Illinois as Model No. 94HBB16WT.

All these components are preferably operatively connected to a microprocessor 56 or programmable logic controller, as desired, to control valve 22.The control valve 22 preferably comprises a quick open/quick close fluid valve, electronically actuated. In one embodiment it is a solenoid operated valve. Other types such as motor operated ball valves could be used in this application. The valve has a flow area of at least 0.030" (0.762 mm) in cross section to prevent clogging. The valve is normally closed and receives a signal from the microprocessor 46 to open. The duration of the open state is governed by input to the microprocessor 46 from the flow/pressure transducer 13, temperature sensor 36, temperature/viscosity rate change selector 44, viscosity selector 42, and dilution ratio selector 40 and cycle duration controller 38.

Microprocessor 46 or compatible programmable logic controller can be any suitable microprocessor or controller. One such useful microprocessor is that made by Microchip Technology Incorporated of Chandler, Arizona under Model No. 12F683.

### Operation

As used herein, the term "cycling" generally refers to the stopping and starting of chemical flow to the eductor for mixing with diluent.

In the current embodiment (see FIGS. 1 and 2) pressurized water is supplied to the water inlet 11. When the water control on/off valve 12 is activated pressurized water enters the flow transducer 13 portion of the apparatus and then flows into the eductor 14. Flow of water through eductor 14 creates a vacuum and draws chemical from the chemical container 20 through the chemical pick-up tubing 21 and control valve 22, into the flowing water diluent. This chemical/diluent water mixture is discharged thru the mixed chemical discharge tube 15 into a suitable mixed and diluted chemical container 16.

As water flows into the flow transducer 13, the transducer 13 transmits a signal proportional to the water flow. In the case of a flow transducer 13, the rate of flow in gallons per minute (GPM) (× 0.06309 l/s) is linearly proportional to the output signal (pulses). Chart 6 of FIG. 11 shows the linear relationship between GPM and Pulses. This linear relationship may be different or different transducers used or flow passage configurations.

As stated previously, the dilution ratio is the amount of water divided by the amount of chemical mixed and dispensed. The traditional way to achieve this was to change the size of the metering orifice in a typical system. According to the invention, however the improved method contemplates controlling the chemical to mix with the water at timed intervals. For example, if for a dispense of 2 minutes long the chemical were to flow for the complete time, a mix ratio may be about 40:1. If the chemical were shut off after the first minute of operation and water only for the last one minute of operation, the dilution ratio for the same system would be 80:1. Therefore by varying the open time for valve 22 to allow for the chemical to mix with the water the final dilution ratio of the water/chemical mixture can be infinitely varied.

Table 4 of FIG. 13 shows how a valve 22 may be cycled to produce varying dilution ratios for a system flowing 4 GPM (0.2524 l/s) into a typical 4 gallon (15.142 l) janitor's bucket.

FIG. 13 illustrates that varying dilution ratios can be produced by varying how long the valve 22 is open. This system will work well for a given dispense volume, in this case 4 gallons (15.142 l). If one were to fill a 3 gallon bucket with the system set to 50:1 dilution ratio, the dispense time for 3 gallons would be 45 seconds. The chemical valve would be open for 48 seconds which would produce a dilution ratio of 40:1.

If dispensing at water flow rates of less than 4 GPM (0.2524 l/s), the above run times shown in Table 4 would not produce the desired ratios. The solution to this is to cycle the chemical control valve in even shorter increments. Table 5 of FIG. 14 shows the results of cycling the chemical control valve every 2 seconds or 30 times for a complete dispense cycle. With the system as described in FIG. 14 a dispense shorter than 60 seconds will give the same dilutions as a 60 second dispense.

A control valve cycle of at least 4 times per minute is recommended to achieve accurate dilution ratios. Otherwise, a premature operator commanded water shutoff may adversely affect a desired ratio.

The cycle duration control 38 changes the cycle time for the control valve. This is shown as a rheostat but dip switches or other means to vary the cycle time could be incorporated. This time is preferably adjustable from 1 second to 60 seconds.

While the invention as described will maintain constant dilutions at pressures where the eductor has achieved full (25 in-Hg) vacuum, there is still a variable issue presented when the water pressure is not high enough for the eductor 14 to generate full vacuum. Referring once again to Chart 2 of FIG. 5, Flow vs. Vacuum, for a typical 4 GPM (0.2524 l/s) Eductor, maximum vacuum is reached at almost 4 GPM (0.2524 l/s) of flow. Also, Chart 3 of FIG. 6, Vacuum vs. Flow thru a 0.015" (0.381 mm) diameter metering orifice, shows an increase in flow thru the orifice as the vacuum increases. Thus, during the "ramp-up" time until full flow is achieved, less vacuum is produced and a ratio or mix generated during this time which varies from optimum.

One possible solution to this problem is to use an algorithm that determines the vacuum of each eductor at a specific flow rate. This algorithm is a non-linear equation and is specific for each eductor. Thus the electronics for the device must be programmed and matched to a specific eductor design.

Another unique solution according to the invention is to use an eductor which obtains full vacuum at a low flow rate/pressure than eductors typically used in proportioners. A pressure vs. vacuum curve for such an improved eductor is shown in Chart 8 of FIG. 15.

Such eductor achieves its upper vacuum very quickly at very low flow rates. With the use of such an eductor, the vacuum is relatively constant from low flow to high flow (the so-called "ramp-up" time being reduced as well as fluctuation of diluent pressure), thus giving uniform chemical flow through the valve at any reasonable flow rate. Performance is still not constant at very low flow rates where the vacuum has not reached it's maximum but this is pressure is about 15 psi (103.42 kPa) lower than almost all typical chemical dispensing installations, and front end performance up to 25 PSI (172.87 kPa) does not adversely affect the operation practically.

Such an eductor is not known to have been used in proportioning systems in the past. One such eductor useful in this regard is that manufactured by Hydro Systems Company of Cincinnati, Ohio under Part No. 440300.

The operation of the invention requires electrical power. Many installations do not have available electric power or the installation of electrical equipment must be made by a licensed electrician. These requirements add substantially to the installation cost of the system and to the marketability of such a system. Battery power is the solution. Small, economical and easy to find batteries are preferred. The system preferably will operate on "AA" size batteries. PWM (pulse width modulation) technology, which is not new to electrical circuits can be used to activate the control valve thus substantially increasing the life of the battery.

Accordingly, the invention provides apparatus and methods for producing accurate dilution control of a concentrated liquid chemical over a variety of conditions and through a wide range of dilution ratios not heretofore possible with fixed orifices.

## Claims

1. A chemical dispensing apparatus for dispensing a first fluid chemical from a first fluid chemical source (20) into a second diluent fluid to form a diluted first fluid chemical at a desired dilution ratio for a dispensing cycle, said apparatus comprising an eductor (14) having a diluent inlet (11) and a chemical inlet, a fixed orifice (23) operatively coupled between said first fluid chemical source (20) and said chemical inlet, a diluent flow transducer (13) for monitoring diluent flow, and a chemical control valve (22) operatively disposed between said chemical inlet and said first fluid chemical source (20), said chemical control valve (22) being operable to cycle between open and closed positions to cycle fluid chemical flow into said eductor (14) for mixing with said diluent fluid when said diluent fluid flows through said eductor (14), and an electronic control (30) for operating said control valve (22) as a function of said diluent flow to produce said diluted first fluid chemical by cycling said chemical control valve (22) between open and closed positions to cycle first fluid chemical input to control dilution ratio during said dispensing cycle and in the dilution ratio range of from 40:1 to 800:1.

2. Apparatus as in claim 1 wherein said control valve (22) has a flow passage larger than 0.030" (0.762mm) in diameter.

3. Apparatus as in either claim 1 or claim 2 wherein said electronic control (30) for operating said control valve (22), comprises a dilution ratio selector (40), a temperature sensor (36) and a viscosity selector (42).

4. Apparatus as in claim 3 further including an electronic temperature/viscosity rate selector (44).

5. A method of mixing a liquid concentrate with a liquid diluent flowing through an eductor (14), the eductor (14) having a diluent inlet (11) and a chemical inlet, a fixed orifice (23) operatively coupled between said first fluid chemical source (20) and said chemical inlet, a diluent flow transducer (13) for monitoring diluent flow, and a chemical control valve (22) operatively disposed between said chemical inlet and said first fluid chemical source (20), the method including the steps of:
monitoring diluent flow with said diluent flow transducer 13;
drawing said liquid concentrate into said eductor (14) through the fixed orifice (23); and
starting and stopping the flow of liquid concentrate a plurality of times during flow of said diluent by controlling the chemical control valve (22) to cycle between opened and closed positions in response to said monitoring of diluents flow to cycle the flow of liquid concentrate and thereby producing a mixture of liquid concentrate and diluent having a dilution ratio of from 40:1 to 800:1.

6. A method as in claim 5 including operating a controller (30) to cycle said liquid concentrate valve (22) during a mixing operation.

7. A method as in claim 5, including and creating a vacuum for drawing a liquid concentrate through said orifice (23) into said diluent in said eductor (14), wherein
controlling the flow of liquid concentrate into said diluent includes:
sensing the temperature of said liquid concentrate.

8. A method as in claim 5 including:
starting and stopping the flow of liquid concentrate once, from a duration of 60 seconds of flow on to 3 seconds of flow on, during one minute of diluent flow and producing a mixture of liquid concentrate and diluent having said dilution ratio, wherein said eductor (14) is a 4 GPM (0.2524 l/s) eductor.

9. A method as in claim 5 including starting and stopping the flow of liquid concentrate into said eductor 30 times from 2.0 seconds to 0.1 seconds for each flow duration during one minute of diluent flow and producing a mixture of liquid concentrate and diluent having said dilution ratio, wherein said eductor (14) is a 4 GPM (0.2524 l/s) eductor.

## Patentansprüche

1. Chemikalienausgabevorrichtung zum Ausgeben einer ersten Flüssigchemikalie aus einer ersten Flüssigchemikalienquelle (20) in ein zweites Verdünnüngsmittelfluid, um eine verdünnte erste Flüssigchemikalie mit einem gewünschten Verdünnungsverhältnis für einen Ausgabezyklus zu bilden, wobei die genannte Vorrichtung Folgendes umfasst: einen Ejektor (14) mit einem Verdünnungsmitteleinlass (11) und einem Chemikalieneinlass, eine feste Drossel (23), die zwischen der genannten ersten Flüssigchemikalienquelle (20) und dem genannten Chemikalieneinlass wirkverbunden ist, einen Verdünnungsmittel-Durchflusswandler (13) zum Überwachen des Verdünnungsmittelflusses, und ein Chemikaliensteuerventil (22), das zwischen dem genannten Chemikalieneinlass und der genannten ersten Flüssigchemikalienquelle (20) wirkverbunden ist, wobei das genannte Chemikaliensteuerventil (22) so ausgelegt ist, dass es zwischen einer offenen und einer geschlossenen Position zykliert, um Flüssigchemikalienfluss in den genannten Ejektor (14) zum Mischen mit dem genannten Verdünnungsmittelfluid zu zyklieren, wenn das genannte Verdünnungsmittelfluid durch den genannte Ejektor (14) fließt, und eine elektronische Steuerung (30) zum Betätigen des genannten Steuerventils (22) in Abhängigkeit von dem genannten Verdünnungsmittelfluss, um die genannte verdünnte erste Flüssigchemikalie durch Zyklieren des genannten Chemikaliensteuerventils (22) zwischen einer offenen und einer geschlossenen Position zu erzeugen, zum Zyklieren von erstem Flüssigchemikalieneingang zum Regeln des Verdünnungsverhältnisses während des genannten Ausgabezyklus in einem Verdünnungsverhältnisbereich von 40:1 bis 800:1.

2. Vorrichtung nach Anspruch 1, wobei das genannte Steuerventil (22) einen Durchflusskanal mit einem Durchmesser von mehr als 0,030 Zoll (0,762 mm) hat.

3. Vorrichtung nach Anspruch 1 oder Anspruch 2, wobei die genannte elektronische Steuerung (30) zum Betätigen des genannten Steuerventils (22) einen Verdünnungsverhältnis-Selektor (40), einen Temperatursensor (36) und einen Viskositätsselektor (42) umfasst.

4. Vorrichtung nach Anspruch 3, die ferner einen elektronischen Temperatur/Viskositätsraten-Selektor (44) aufweist.

5. Verfahren zum Mischen eines Flüssigkonzentrats mit einem flüssigen Verdünnungsmittel, das durch einen Ejektor (14) fließt, wobei der Ejektor (14) Folgendes beinhaltet:
einen Verdünnungsmitteleinlass (11) und einen Chemikalieneinlass, eine feste Drossel (23), die zwischen der genannten ersten Flüssigchemikalienquelle (20) und dem genannten Chemikalieneinlass wirkverbunden ist, einen Verdünnungsmittel-Durchflusswandler (13) zum Überwachen des Verdünnungsmittelflusses, und ein Chemikaliensteuerventil (22), das zwischen dem genannten Chemikalieneinlass und der genannten ersten Flüssigchemikalienquelle (20) wirkverbunden ist, wobei das Verfahren die folgenden Schritte beinhaltet:
Überwachen des Verdünnungsmittelflusses mit dem genannten Verdünnungsmittel-Durchflusswandler (13);
Ziehen des genannten Flüssigkonzentrats in den genannten Ejektor (14) durch die feste Drossel (23); und
Starten und Stoppen des Flusses von Flüssigkonzentrat mehrere Male während des Flusses des genannten Verdünnungsmittels durch Steuern des Chemikaliensteuerventils (22), um als Reaktion auf die genannte Überwachung von Verdünnungsmittelfluss zwischen einer offenen und einer geschlossenen Position zu zyklieren, um den Fluss von Flüssigkonzentrat zu zyklieren und dadurch ein Gemisch aus Flüssigkonzentrat und Verdünnungsmittel mit einem Verdünnungsverhältnis von 40:1 bis 800:1 zu erzeugen.

6. Verfahren nach Anspruch 5, das das Betreiben einer Steuerung (30) zum Zyklieren des genannten Flüssigkonzentratventils (22) während eines Mischbetriebs beinhaltet.

7. Verfahren nach Anspruch 5, das ein Vakuum zum Ziehen eines Flüssigkonzentrats durch die genannte Drossel (23) in das genannte Verdünnungsmittel in dem genannten Ejektor (14) beinhaltet und erzeugt, wobei
das Steuern des Flusses von Flüssigkonzentrat in das genannte Verdünnungsmittel Folgendes beinhaltet:
Erfassen der Temperatur des genannten Flüssigkonzentrats.

8. Verfahren nach Anspruch 5, das Folgendes beinhaltet:
Starten und Stoppen des Flusses von Flüssigkonzentrat einmal für eien Dauer von 60 Sekunden Fluss bis zu 3 Sekunden Fluss während einer Minute Verdünnungsmittelfluss und Erzeugen eines Gemischs aus Flüssigkonzentrat und Verdünnungsmittel mit dem genannten Verdünnungsverhältnis, wobei der genannte Ejektor (14) ein Ejektor von 4 GPM (0,2524 l/s) ist.

9. Verfahren nach Anspruch 5, das das Starten und Stoppen des Flüssigkonzentratflusses in den genannten Ejektor 30 Mal von 2,0 Sekunden bis 0,1 Sekunde für jede Fließdauer während einer Minute Verdünnungsmittelfluss und das Erzeugen eines Gemischs aus Flüssigkonzentrat und Verdünnungsmittel mit dem genannten Verdünnungsverhältnis aufweist, wobei der genannte Ejektor (14) ein Ejektor mit 4 GPM (0,2524 l/s) ist.

## Revendications

1. Appareil de distribution de produit chimique destiné à distribuer un premier produit chimique fluide depuis une source de premier produit chimique fluide (20) dans un second fluide diluant afin de former un premier produit chimique fluide dilué à un rapport de dilution souhaité pendant un cycle de distribution, ledit appareil comprenant un éducteur (14) ayant une entrée de diluant (11) et une entrée de produit chimique, un orifice fixe (23) couplé opérationnellement entre ladite source de premier produit chimique fluide (20) et ladite entrée de produit chimique, un transducteur d'écoulement de diluant (13) pour contrôler l'écoulement du diluant, et une vanne de commande de produit chimique (22) disposée opérationnellement entre ladite entrée chimique et ladite source de premier produit chimique fluide (20), ladite vanne de commande de produit chimique (22) étant actionnable pour passer cycliquement d'une position fermée à une position ouverte pour faire passer cycliquement l'écoulement de produit chimique fluide dans ledit éducteur (14) afin de le mélanger avec ledit fluide diluant quand ledit fluide diluant s'écoule à travers ledit éducteur (14), et une commande électronique (30) pour actionner ladite vanne de commande (22) en fonction dudit écoulement de diluant afin de produire ledit premier produit chimique fluide dilué en déplaçant cycliquement ladite vanne de commande de produit chimique (22) entre les positions ouverte et fermée afin d'utiliser cycliquement l'entrée de premier produit chimique fluide pour commander le rapport de dilution durant ledit cycle de distribution et dans la plage de rapports de dilution de 40:1 à 800:1.

2. Appareil selon la revendication 1, dans lequel ladite vanne de commande (22) a un passage d'écoulement d'un diamètre de plus de 0,762 mm (0,030 pouce).

3. Appareil selon la revendication 1 ou la revendication 2, dans lequel ladite commande électronique (30) pour actionner ladite vanne de commande (22) comprend un sélecteur de rapport de dilution (40), un capteur de température (36) et un sélecteur de viscosité (42).

4. Appareil selon la revendication 3, comportant en outre un sélecteur électronique de température/taux de viscosité (42).

5. Procédé de mélange d'un concentré liquide avec un diluant liquide s'écoulant à travers un éducteur (14), l'éducteur (14) ayant une entrée de diluant (11) et une entrée chimique, un orifice fixe (23) couplé opérationnellement entre ladite première source de produit chimique fluide (20) et ladite entrée de produit chimique, un transducteur d'écoulement de diluant (13), pour contrôler l'écoulement du diluant, et une vanne de commande de produit chimique (22) disposée opérationnellement entre ladite entrée chimique et ladite source de premier produit chimique fluide (20), le procédé comportant les étapes consistant à :
contrôler l'écoulement de diluant avec ledit transducteur d'écoulement de diluant 13 ;
faire passer ledit concentré liquide dans ledit éducteur (14) à travers l'orifice fixe (23) ; et
lancer et arrêter l'écoulement du concentré liquide plusieurs fois durant l'écoulement dudit diluant en commandant la vanne de commande de produit chimique (22) pour qu'elle passe cycliquement entre les positions ouverte et fermée en réponse audit contrôle de l'écoulement de diluant afin de cycler l'écoulement du concentré liquide et produire ainsi un mélange de concentré liquide et de diluant ayant un rapport de dilution de 40:1 à 800:1.

6. Procédé selon la revendication 5, comportant l'actionnement d'une unité de commande (30) pour actionner cycliquement ladite vanne de concentré liquide (22) durant une opération de mélange.

7. Procédé selon la revendication 5, comportant et créant un vide pour faire passer un concentré liquide à travers ledit orifice (23) dans ledit diluant dans ledit éducteur (14), dans lequel
la commande du flux de concentré liquide dans ledit diluant comprend :
la détection de la température dudit concentré liquide.

8. Procédé selon la revendication 5, comportant :
le lancement et l'arrêt de l'écoulement du concentré liquide une seule fois, d'une durée de 60 secondes d'écoulement à 3 secondes d'écoulement, durant une minute d'écoulement de diluant et la production d'un mélange de concentré liquide et de diluant ayant ledit rapport de dilution, ledit éducteur (14) étant un éducteur de 0,2524 l/s (4 GPM).

9. Procédé selon la revendication 5, comportant le lancement et l'arrêt de l'écoulement du concentré liquide dans ledit éducteur 30 fois de 2,0 secondes à 0,1 seconde pour chaque durée d'écoulement durant une minute d'écoulement de diluant et la production d'un mélange de concentré liquide et de diluant ayant ledit rapport de dilution, ledit éducteur (14) étant un éducteur de 0,2524 l/s (4 GPM).
